# EUROPÄISCHE PATENTSCHRIFT

(11) **EP 1 711 698 B1**
(45) Veröffentlichungstag und Bekanntmachung des Hinweises auf die Patenterteilung: **03.06.2009**
(21) Anmeldenummer: 05700855.9
(22) Anmeldetag: 12.01.2005
(51) Int. Cl.: F01P 7/16

(54) **THERMOSTATVENTILANORDNUNG**
THERMOSTAT VALVE ARRANGEMENT
ENSEMBLE SOUPAPE THERMOSTATIQUE

(30) Priorität: 16.01.2004 DE 102004002995
(43) Veröffentlichungstag der Anmeldung: 18.10.2006
(73) Patentinhaber: ITW Automotive Products GmbH & Co. KG, 58636 Iserlohn (DE)
(72) Erfinder: HELDBERG, Carsten, 27308 Kirchlinteln (DE); BÄTHER, Thomas, 29664 Walsrode (DE)
(74) Vertreter: Hauck Patent- und Rechtsanwälte
(86) Internationale Anmeldenummer: PCT/EP2005/000236
(87) Internationale Veröffentlichungsnummer: WO 2005/068799

(56) Entgegenhaltungen:
- WO-A-03/074911
- DE-A1- 4 231 649
- DE-A1- 19 504 677
- DE-A1- 19 646 295
- US-A- 3 248 056
- US-B1- 6 471 133

## Beschreibung

Die Erfindung bezieht sich auf eine Thermostatventilanordnung nach dem Patentanspruch 1.

Es ist bekannt, in den Kühlkreislauf einer Verbrennungskraftmaschine einen Thermostaten anzuordnen. Der Thermostat gibt entweder den Weg des Kühlmittels vom Motor durch den Kühler frei oder alternativ zu einem Bypass. Im letzteren Fall wird das Kühlmittel nicht im Kühler gekühlt. Dies ist z.B. in der Warmlaufphase der Verbrennungskraftmaschine der Fall. Thermostaten der beschriebenen Art arbeiten bekanntlich temperaturabhängig. Hat das Kühlmittel eine vorgegebene Temperatur erreicht, öffnet der Thermostat den Weg zum Kühler und schließt den Bypass.

Herkömmliche Thermostatventile weisen eine napfförmige Halteplatte auf, die auf gegenüberliegenden Seiten Haltebügel aufweist. Der obere Haltebügel dient zur Aufnahme eines Widerlagers für ein Dehnstoffelement. Das Dehnstoffelement sitzt in einem Ventilteller aus Metall, der von einem Dichtgummi überzogen ist. Der Ventilteller wirkt mit einem Ventilsitz in der Halteplatte zusammen. Der Haltebügel an der Unterseite ist ein Widerlager für die Ventilfeder, die gegen den Ventilteller anliegt. Am Dehnstoffelement ist an der Unterseite ein weiterer Ventilteller befestigt, welcher sich axial mit dem Dehnstoffelement bewegt und von einer zweiter Druckfeder vorgespannt ist. Diese Ventilteller bilden das Bypassventil. Haupt- und Bypassventil bewegen sich gegensinnig, d.h., wenn das Hauptventil geschlossen ist, ist das Bypassventil geöffnet und umgekehrt. Die zweite Druckfeder dient dazu, einen Überhub des Dehnstoffelements bei geschlossenem Bypassventil bei weiter ansteigender Temperatur abzufangen.

Nachteilig bei der herkömmlichen Konstruktion ist zum einen der hohe Strömungswiderstand, der durch den oberen Haltebügel verursacht wird sowie zum anderen der relativ große Durchmesser der Halteplatte.

Aus DE 4231 649 A1 ist eine Thermostatventilanordnung bekannt geworden für den Kühlkreis eines Verbrennungsmotors, die ein Hauptventil, ein Bypassventil und ein Dehnstoffelement enthält. Der Hauptventilsitz ist von einer konischen Sitzfläche gebildet, und das Hauptventilglied bildet zusammen mit einem Bypassventilglied eine Ventileinheit, die das Dehnstoffelement aufnimmt. Das obere Ende des Dehnstoffelements ist an einem Widerlager des Gehäuses abgestützt, und die Ventileinheit wird in einem Führungsbauteil axial beweglich geführt. Das Führungsbauteil ist in dem Gehäuse axial abgestützt, und eine Ventilfeder wirkt zwischen Ventileinheit und Führungsbauteil. Ventileinheit und Führungsbauteil weisen zusammenwirkende Anschläge auf, die ein Auseinanderbewegen begrenzen. Das Bypassventilglied ist kolbenförmig gebildet und wirkt mit einem hohlzylindrischen Abschnitt des Führungsbauteils zusammen.

Aus WO 03/074911 A ist bekannt geworden, den Kolben eines Fluidventils in Nuten des Ventilgehäuses zu führen.

Der Erfindung liegt die Aufgabe zugrunde, eine Thermostatventilanordnung für den Kühlkreislauf von Verbrennungskraftmaschinen zu schaffen, mit der die Strömungsverhältnisse verbessert und der Durchmesser der Anordnung verringert werden kann. Darüber hinaus soll die Thermostatventilanordnung aus Kunststoffteilen gefertigt und auf einfache Weise zusammengebaut werden können.

Diese Aufgabe wird durch die Merkmale des Patentanspruchs 1 gelöst.

Bei der erfindungsgemäßen Thermostatventilanordnung wird der Hauptventilsitz von einer konischen Sitzfläche im Gehäuse gebildet. Das Gehäuse ist, wie üblich, ein Teil der Rohrverbindung im Kühlkreislauf. Bei der erfindungsgemäßen Ventilanordnung kann der Ventilsitz an einem Deckel oder dergleichen ausgebildet sein, der mit dem die übrigen Teile aufnehmenden Gehäuse verschraubt oder anderweitig in dichtender Verbindung gebracht werden kann.

Erfindungsgemäß ist ferner vorgesehen, daß das Hauptventilglied mit einem axial beabstandeten kolbenförmigen Bypassventilglied eine Ventileinheit bildet, die mithin in dem Gehäuse axial verstellbar ausgebildet sein muß, um das Hauptventil oder das Bypassventil zu öffnen. Die Ventileinheit nimmt das Dehnstoffelement auf, so daß es in einer Richtung axial gesichert ist, während ein anderer Abschnitt des Dehnstoffelements von einem Widerlager des Gehäuses abgestützt ist. Wird, wie bereits erwähnt, der Hauptventilsitz in einem Deckel oder dergleichen ausgebildet, ist es zweckmäßig, das Widerlager ebenfalls in einem solchen Deckel anzuordnen und z.B. als inneren Teil des Deckenabschnitts des Deckels auszubilden. Bei einer Ausdehnung des Dehnstoffelements wird mithin das Hauptventil geöffnet, während das Bypassventil geschlossen wird. Zu diesem Zweck ist das Bypassventilglied kolbenförmig ausgebildet und wirkt mit einem hohlzylindrischen Abschnitt eines Führungsbauteils zusammen, das gehäusefest angeordnet ist. Die Ventileinheit muß daher relativ zum Führungsbauteil axial verstellbar sein, wobei zusammenwirkende Anschläge beider Teile dafür sorgen, daß das Auseinanderbewegen beider Teile begrenzt wird. Dies ist erforderlich, da zwischen den beiden Teilen die Ventilfeder angeordnet ist, welche die Ventileinheit von dem Führungsbauteil fort vorspannt.

Das Führungsbauteil nach der Erfindung weist mindestens eine achsparallele Nut auf, die sich in den hohlzylindrischen Abschnitt hinein erstreckt und die an dem dem kolbenförmigen Bypassventilglied zugekehrten Ende einen zur Seite hin offenen Abschnitt aufweist. Das kolbenförmige Bypassventilglied weist eine radiale Nase auf, die über den seitlichen Abschnitt der Nut nach Art einer Bajonettverbindung in die Nut einführbar ist. Auf diese Weise wird zum einen eine Führung des Bypassventilglieds und insgesamt der Ventileinheit aus Haupt- und Bypassventilglied erzielt und gleichzeitig eine Begrenzung gegen das Auseinanderbewegen dieser beiden Teile.

Die beschriebenen Bauteile, die bis auf die Ventilfeder und das Dehnstoffelement aus Kunststoff geformt werden können, können in geeigneter Weise vormontiert werden, bevor sie in das Gehäuse eingesetzt werden. Bei Versagen kann die erfindungsgemäße Thermostatventilanordnung leicht entfernt und durch eine andere ausgetauscht werden. Der Aufwand zur Herstellung der erfindungsgemäßen Ventilanordnung ist gering. Außerdem erfordert sie einen geringen Bauraum. Die Ventilanordnung ist darüber hinaus strömungsgünstig, da unnötige Strömungswiderstände entfallen. Da das Bypassventilglied nicht gegen einen festen Ventilsitz angelegt wird, vielmehr sich begrenzt frei im hohlzylindrischen Abschnitt des Führungsbauteils bewegen kann, entfällt eine zweite Feder für das Bypassventilglied. Der Überhub des Dehnstoffelements wird einfach durch eine axiale Verstellung des kolbenförmigen Bypassventilglieds aufgefangen. Da die Abdichtung im Bereich des Bypassventils nicht besonders gut sein muß, reicht es aus, wenn das kolbenförmige Bypassventilglied leichtgängig in dem hohlzylindrischen Abschnitt geführt wird.

Nach einer Ausgestaltung der Erfindung weist das Hauptventilglied zwei miteinander verbindbare koaxiale Teller auf, die zwischen sich einen Dichtring aufnehmen, der mit einer konischen Sitzfläche des Hauptventilsitzes in Eingriff bringbar ist. Das Hauptventil für einen Thermostaten muß dicht schließen. Die Anlage von Kunststoff gegen Kunststoff oder Metall gegen Metall würde diese Voraussetzung nicht erfüllen. Daher ist bei dieser Ausgestaltung der Erfindung ein Dichtring oder eine Dichtscheibe vorgesehen. Die beiden Teller oder Scheiben, die zwischen sich den Dichtring aufnehmen, können in geeigneter Weise miteinander verbunden werden, z.B. über eine Rastverbindung, in dem Zapfen des einen Tellers in entsprechende Löcher des anderen Tellers einrasten.

Nach einer anderen Ausgestaltung der Erfindung ist vorgesehen, daß das Dehnstoffelement einen Schaft aufweist, der an dem dem Hauptventilsitz zugekehrten Ende einen radialen Flansch besitzt, der in einer komplementären Ausnehmung des zugekehrten Tellers aufgenommen ist. Bei der Vormontage ist lediglich erforderlich, das Dehnstoffelement in das Hauptventilglied einzusetzen, wobei sich die größte Länge des axialen Schaftes des Dehnstoffelements innerhalb des Bereiches befindet, der zwischen dem Hauptventilglied und dem Bypassventilglied liegt, welches, wie schon erwähnt, mit dem Hauptventilglied verbunden ist. Diese Verbindung erfolgt nach einer weiteren Ausgestaltung der Erfindung vorteilhafterweise über mehrere achsparallele Stege, die eine Art Käfig bilden.

Eine weitere Ausgestaltung der Erfindung sieht vor, daß das Führungsbauteil mehrere achsparallele, in Umfangsrichtung beabstandete Ansätze oder Arme aufweist, in denen jeweils eine Führungsnut ausgebildet ist. Es versteht sich, daß das kolbenförmige Bypassventilglied eine entsprechende Anzahl und Anordnung von radialen Vorsprüngen bzw.
Nasen hat, die mit den Führungsnuten zusammenwirken.

Das Führungsbauteil stützt sich im Gehäuse an einer geeigneten Fläche ab. Nach einer Ausgestaltung der Erfindung weist diese Fläche eine Ringnut auf, die mit einer ringförmigen Rippe oder dergleichen des Führungsbauteils zusammenwirkt, um dieses im Gehäuse zu zentrieren.

Ein Ausführungsbeispiel der Erfindung wird nachfolgend anhand von Zeichnungen näher erläutert.
- Fig.: 1 zeigt in Explosionsdarstellung eine vormontierbare Einheit für eine Thermostatventilanordnung nach der Erfindung.
- Fig. 2: zeigt in Seitenansicht den Zusammenbau der Teile nach Fig. 1.
- Fig. 3: zeigt einen Schnitt durch die Darstellung nach Fig. 2 entlang der Linie 3-3.
- Fig. 4: zeigt die Anordnung der Einheit nach den Fign. 1 bis 3 in perspektivischer Darstellung in einem Ventilgehäuse.

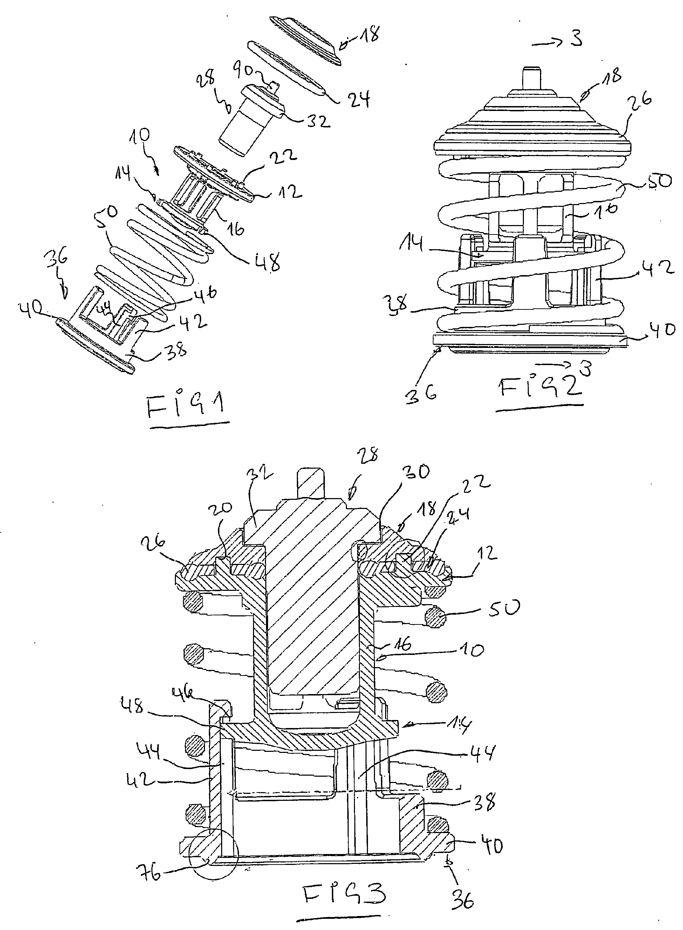

In Fig. 1 ist ein einteiliges aus Kunststoff geformtes Element 10 zu erkennen, das einen ersten Klemmteller 12 und ein kolbenförmiges Ventilglied 14 aufweist. Das kolbenförmige Ventilglied 14 ist über achsparallele Stege 16 mit dem ersten Klemmteller 12 verbunden. Ein kegelförmiger zweiter Klemmteller 18 weist eine

Reihe von Ausnehmungen 20 auf, die an der Unterseite eingeformt sind (Fig. 3) und auf einem Kreis konzentrisch zur Achse angeordnet sind. Der Klemmteller 12 weist Klemmstifte 22 auf, die passend zu den Ausnehmungen 20 angeordnet und geformt sind. Die Ausnehmungen 20 und die Stifte 22 bilden eine Schnappverbindung, was im einzelnen nicht näher dargestellt ist. Sie können auch durch Schweißung oder dergleichen miteinander verbunden werden. Bei dieser Verbindung ist zwischen den Tellern 12, 18 ein Dichtring 24 angeordnet und eingespannt, der am Umfang einen im Schnitt kreisförmigen Wulst 26 aufweist. Nach außen steht der Wulst 26 etwas über die Teller 12, 18 über, worauf weiter unten noch eingegangen wird.

Wie aus Fig. 3 zu erkennen, wird ein Dehnstoffelement 28 von bekanntem Aufbau von den zusammengebauten Teilen aus Einheit 10, Dichtring 24 und Klemmteller 12, 18 aufgenommen. Der Klemmteller 18 weist eine kreisförmige Ausnehmung 30 auf, in der ein oberer radialer Flansch 32 des Dehnstoffelements 28 aufgenommen ist. Der längliche Schaft des Dehnstoffelements 28 erstreckt sich durch eine mittige Öffnung im Dichtring 24 und im unteren Teller 12 in den Bereich zwischen den Stegen 16.

Ein Führungsbauteil 36 weist einen zylindrischen Abschnitt 38 auf, an den am unteren Ende ein radialer Flansch 40 angeformt ist. An dem dem Flansch 40 gegenüberliegenden Ende sind drei achsparallele Arme 42 an den zylindrischen Abschnitt 38 angeformt. Wie aus der Zusammenschau der Fign. 1 und 3 hervorgeht, haben die Arme 42 an der Innenseite jeweils eine achsparallele Nut 44, die im Bereich des freien Endes der Arme 42 einen zur Seite geöffneten Abschnitt 46 besitzt. Das kolbenförmige Ventilglied 14 hat einen Durchmesser, der annähernd dem Innendurchmesser des zylindrischen Abschnitts 38 entspricht. Wie erkennbar, erstrecken sich die Nuten 44 auch in den zylindrischen Abschnitt 38. Das kolbenförmige Bypassventilglied 14 weist radiale Nasen auf, wie bei 48 in Fig. 1 und 3 dargestellt.

Die Nasen sind so geformt und angeordnet, daß sie annähernd passend von den Nuten 44 aufgenommen werden. Damit die Nasen 48 in die Nuten 44 gelangen, werden sie so gegenüber den seitlichen Abschnitten 48 gehalten, daß durch Relativdrehung von Führungsbauteil und Einheit 20 die Nasen 48 in das obere Ende der Nuten 44 gelangen. Dadurch sind die in der Fig. 1 dargestellten Bauteile miteinander verbunden. Vor der beschriebenen Verbindung der Einheit 10 mit dem Führungsbauteil 36 wird eine Ventilfeder 50 dazwischen angeordnet, wobei sich die Ventilfeder zum einen an dem Flansch 40 und zum anderen an dem Teller 12 abstützt.

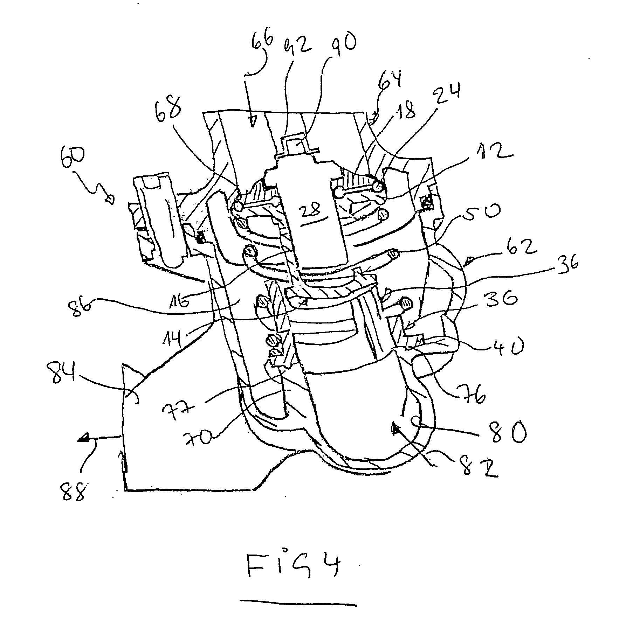

Die in den Fign. 1 bis 3 gezeigte und gemäß Fign. 2 und 3 zusammengesetzte Einheit wird in ein Ventilgehäuse 60 gemäß Fig. 4 eingebaut, das aus einem unteren Gehäuseteil 62 und einem Deckelteil 64 zusammengesetzt ist. Das Deckelteil 64 ist mit dem oberen Ende nicht dargestellt, das in bekannter Weise mit der Leitung verbunden ist, die zum Kühler (nicht gezeigt) der Verbrennungskraftmaschine (nicht gezeigt) geführt ist. Der Fluß des Kühlmittels ist durch den Pfeil 66 angedeutet. Im Deckelteil 64, das in geeigneter Weise dichtend mit dem unteren Gehäuseteil 62 verbunden ist, ist ein konischer Ventilsitz 68 geformt. Die Sitzfläche wirkt mit dem Dichtwulst 26 des Dichtrings 24 zusammen.

Im unteren Gehäuseteil 62 ist ein ringförmiger Sockel 70 geformt, der eine ringförmige Abstützfläche aufweist mit einer im Querschnitt dreieckförmigen Ringnut 72. Wie insbesondere aus Fig. 3 hervorgeht, ist an der Unterseite des Flansches 40 eine im Querschnitt dreieckförmige Ringrippe 76 geformt. Die Ringrippe 76 greift in die Ringnut 77 ein, wodurch das Führungsbauteil 36 zentriert und abgestützt im unteren Gehäuseteil 62 angeordnet ist. Innerhalb des ringförmigen Sockels 70, dessen Innendurchmesser annähernd dem Innendurchmesser des zylindrischen Abschnitts 36 entspricht, ist ein seitlicher Eingang 80 vorgesehen für die Kühlflüssigkeit, die vom Bypass (nicht gezeigt) des Kühlsystems der Verbrennungskraftmaschine kommt, wie durch Pfeil 82 angedeutet. Ein weiterer Abgang 84 ist mit dem Raum 86 des unteren Gehäuseteils 62 in Verbindung zur Ableitung des Kühlmittels zur Kühlmittelpumpe, wie durch Pfeil 88 angedeutet.

Bei der Montage der Einheit gemäß Fig. 2 und 3 wird bei entferntem Deckelteil 64 diese in das untere Gehäuseteil 62 eingesetzt, wobei das Führungsbauteil 36 auf der Ringfläche des Sockels 70 abgestützt ist und die Ringrippe 76 in die Ringnut 77 eingreift. Anschließend wird das Deckelteil 64 aufgesetzt und mit dem unteren Gehäuseteil 62 dichtend verbunden, wobei auf den oberen Teller 18 über die Sitzfläche 68 ein axialer Druck ausgeübt wird, wodurch die Feder 50 vorgespannt wird. Die Anordnung ist derart, daß das kolbenförmige Ventilglied 14, das ein Bypassventilglied ist, sich außerhalb des zylindrischen Abschnitts 36 befindet. Dadurch ist das Bypassventil geöffnet und das Kühlmittel kann entsprechend Pfeil 82 vom Motor kommend über das geöffnete Bypassventil in den Raum 86 und zum Abgang 84 gemäß Pfeil 88 zur Kühlmittelpumpe strömen. Steigt die Temperatur des Kühlmittels, z.B. Kühlwasser, an, dehnt sich das Dehnstoffelement 28, das mit seinem oberen Abschnitt 90 an einem Widerlager 92 im Deckelteil 64 zusammenwirkt, aus und drückt dadurch die Telleranordnung 18, 12 und den Dichtring 24 nach unten außer Eingriff mit dem Hauptventilsitz 68. Gleichzeitig schließt das kolbenförmige Bypassventilglied 14 das Bypassventil, indem es in den zylindrischen Abschnitt 36 eintaucht.

Die Arme 42 des Führungsbauteils 36 werden durch den Einbau der Anordnung in das Gehäuse 60 von den Kräften der Feder 50 entlastet, da die Feder 50 durch den Deckelteil 64 etwas zusammengedrückt wird. Gleichwohl wird zwischen dem Führungsbauteil und der Einheit 10 eine Verdrehsicherung erreicht.

Wie insbesondere aus Fig. 4 erkennbar, ergibt sich eine strömungsgünstige Anordnung, welche erlaubt, den Durchmesser des gesamten Thermostaten zu verringern, ohne den Strömungswiderstand zu vergrößern.

## Patentansprüche

1. Thermostatventilanordnung für den Kühlkreis einer Verbrennungskraftmaschine, bei der in einem Gehäuse (60,064) ein Hauptventilglied (18) eines Hauptventils beweglich gelagert ist, das von einer Feder gegen einen Hauptventilsitz (68) andrückbar ist, bei der ferner ein Bypassventilglied (14) eines Bypassventils vorgesehen ist, das mit einem Bypassventilsitz im Gehäuse (60,064) zusammenwirkt und bei der ein Dehnstoffelement (DWE) (28) mit einem ersten Abschnitt mit einem gehäusefesten Widerlager und mit einem zweiten Abschnitt so mit dem Hauptventilglied (18) und dem Bypassventilglied (14) zusammenwirkt, dass wahlweise Hauptventil oder Bypassventil geschlossen bzw. geöffnet sind, um den Kühlkreislauf der Verbrennungskraftmaschine über einen Kühler oder einen Bypass herzustellen, wobei der Hauptventilsitz (68) von einer konischen Sitzfläche im Gehäuse (60, 64) gebildet ist, das Hauptventilglied mit einem axial beabstandeten kolbenförmigen Bypassventilglied (14) eine Ventileinheit bildet, die das Dehnstoffelement in einer axialen Ausnehmung in einer Richtung axial gesichert aufnimmt, während das andere Ende des Dehnstoffelements (28) von einem Widerlager (92) des Gehäuses (60, 64) abgestützt ist, die Ventileinheit in einem Führungsbauteil (36) axial beweglich geführt ist, das seinerseits in dem Gehäuse (60, 62, 64) axial abgestützt ist, wobei zwischen Ventileinheit und Führungsbauteil (36) eine Ventilfeder (50) wirkt, welche die Einheit in Richtung Hauptventilsitz (68) vorspannt und Ventileinheit und Führungsbauteil (36) zusammenwirkende Anschläge aufweisen, durch welche das Auseinanderbewegen der Teile begrenzt ist und das kolbenförmige Bypassventilglied (14) mit einem hohlzylindrischen Abschnitt (38) des Führungsbauteils (36) zusammenwirkt **dadurch gekennzeichnet, dass** das Führungsbauteil (36) mindestens eine achsparallele Führungsnut (44) aufweist, die sich in den hohlzylindrischen Abschnitt (38) hinein erstreckt und die an dem dem kolbenförmigen Bypassventilglied (14) zugekehrten Ende einen zur Seite hin offenen Abschnitt (46) aufweist und das kolbenförmige Bypasswentilglied (14) eine radiale Nase (48) aufweist, die über den seitlichen Abschnitt (46) der Nut (44) nach Art einer Bajonettverbindung in diese einführbar ist.

2. Ventilanordnung nach Anspruch 1, **dadurch gekennzeichnet, daß** das Hauptventilglied zwei miteinander verbindbare koaxiale Teller (12, 18) aufweist, die zwischen sich einen Dichtring (24) aufnehmen, der mit der konischen Dichtfläche (68) des Hauptventilsitzes in Eingriff bringbar ist.

3. Ventilanordnung nach Anspruch 2, **dadurch gekennzeichnet, daß** die Teller (12, 18) mittels Rastzapfen (22) und Rastlöchern (20) oder dergleichen miteinander verbindbar sind.

4. Ventilanordnung nach Anspruch 2 oder 3, **dadurch gekennzeichnet, daß** das Dehnstoffelement (28) einen Schaft aufweist, der an dem dem Hauptventilsitz (68) zugekehrten Ende einen radialen Flansch (32) aufweist, der in einer komplementären Ausnehmung (30) des zugekehrten Tellers (18) aufgenommen ist.

5. Ventilanordnung nach einem der Ansprüche 1 bis 4, **dadurch gekennzeichnet, daß** das Hauptventilglied über mehrere achsparallele Stege (16) mit dem kolbenförmigen Bypassventilglied (14) verbunden ist.

6. Ventilanordnung nach Anspruch 2 und 5, **dadurch gekennzeichnet, daß** der dem kolbenförmigen Bypassventilglied (14) zugekehrte Teller (12) mit diesem über die Stege (16 ) verbunden ist und mit diesen ein einteiliges Bauteil (10) bildet.

7. Ventilanordnung nach einem der Ansprüche 1 bis 6, **dadurch gekennzeichet, daß** das Führungsbauteil (36) mehrere achsparallele in Umfangsrichtung beabstandete Arme (42) aufweist, in denen jeweils eine Führungsnut (44) ausgebildet ist.

8. Ventilanordnung nach einem der Ansprüche 1 bis 7, **dadurch gekennzeichnet, daß** das Führungsbauteil (36) einen radialen Flansch (40) aufweist, auf dem sich die Ventilfeder (50) abstützt.

9. Ventilanordnung nach einem der Ansprüche 1 bis 8, **dadurch gekennzeichnet, daß** das Führungsbauteil (36) an dem einer Anlagefläche für das Führungsbauteil (36) im Gehäuse zugekehrten Ende einen Vorsprung oder eine Ringrippe (76) aufweist, der/die mit einer Ringnut (77) in der Abstützfläche für das Führungsbauteil (36) zusammenwirkt.

## Claims

1. Thermostatic valve arrangement for the cooling circuit of an internal combustion engine, in which a main valve member (18) of a main valve is mounted movably in a housing (60, 64) and can be pressed by a spring against a main valve seat (68), in which, furthermore, a bypass valve member (14) of a bypass valve is provided, which cooperates with a bypass valve seat in the housing (60, 64), and in which an expandable material element (DWE) (28) cooperates by means of a first portion with an abutment fixed to the housing and by means of a second portion with the main valve member (18) and the bypass valve member (14), such that the main valve or the bypass valve is selected to be closed or opened in order to produce the cooling circuit of the internal combustion engine via a cooler or a bypass, the main valve seat (68) being formed by a conical seat surface in the housing (60, 64), the main valve member forming with an axially spaced-apart piston-shaped bypass valve member (14) a valve unit which receives the expandable material element in an axial recess so that the said element is secured axially in one direction, while the other end of the expandable material element (28) is supported by an abutment (92) of the housing (60, 64), the valve unit being guided axially movably in a guide component (36) which is itself supported axially in the housing (60, 62, 64), there acting between the valve unit and guide component (36) a valve spring (50) which prestresses the unit in the direction of main valve seat (68), and a valve unit and guide component (36) having cooperating stops, by means of which the movement of the parts apart from one another is limited, and the piston-shaped bypass valve member (14) cooperating with a hollow-cylindrical portion (38) of the guide component (36), **characterized in that** the guide component (36) has at least one axially parallel guide groove (44) which extends into the hollow-cylindrical portion (38) and which, at the end facing the piston-shaped bypass valve member (14), has a portion (46) open towards the side, and the piston-shaped bypass valve member (14) has a radial nose (48) which can be introduced into the groove (44) via the lateral portion (46) of the latter in the manner of a bayonet connection.

2. Valve arrangement according to Claim 1,
**characterized in that** the main valve member has two coaxial discs (12, 18) which are connectable to one another and which between them receive a sealing ring (24) which can be brought into engagement with the conical sealing surface (68) of the main valve seat.

3. Valve arrangement according to Claim 2,
**characterized in that** the discs (12, 18) are connectable to one another by means of latching tenons (22) and latching holes (20) or the like.

4. Valve arrangement according to Claim 2 or 3,
**characterized in that** the expandable material element (28) has a shank which at the end facing the main valve seat (68) has a radial flange (32) which is received in a complementary recess (30) of the disc (18) facing it.

5. Valve arrangement according to one of Claims 1 to 4, **characterized in that** the main valve member is connected to the piston-shaped bypass valve member (14) via a plurality of axially parallel webs (16).

6. Valve arrangement according to Claims 2 and 5, **characterized in that** the disc (12) facing the piston-shaped bypass valve member (14) is connected to the latter via the webs (16) and with these forms a one-piece component (10).

7. Valve arrangement according to one of Claims 1 to 6, **characterized in that** the guide component (36) has a plurality of axially parallel arms (42) which are spaced apart in the circumferential direction and in each of which a guide groove (44) is formed.

8. Valve arrangement according to one of Claims 1 to 7, **characterized in that** the guide component (36) has a radial flange (40) on which the valve spring (50) is supported.

9. Valve arrangement according to one of Claims 1 to 8, **characterized in that** the guide component (36) has, at the end facing a bearing surface for the guide component (36) in the housing, a projection or an annular rib (76) which cooperates with an annular groove (77) in the supporting surface for the guide component (36).

## Revendications

1. Ensemble de soupape thermostatique pour le circuit de refroidissement d'un moteur à combustion interne, dans lequel, dans un boîtier (60, 64), un organe de soupape principale (18) d'une soupape principale est monté mobile et peut être pressé par un ressort contre un siège de soupape principale (68), dans lequel en outre un organe de soupape de dérivation (14) d'une soupape de dérivation est prévu, lequel coopère avec un siège de soupape de dérivation dans le boîtier (60, 64) et dans lequel un élément en matériau extensible (DWE) (28) coopère par une première portion avec une butée fixée au boîtier et par une deuxième portion avec l'organe de soupape principale (18) et l'organe de soupape de dérivation (14) de telle sorte que la soupape principale ou la soupape de dérivation soient fermées ou ouvertes de manière sélective, afin de réaliser le circuit de refroidissement du moteur à combustion interne par le biais d'un radiateur ou d'une dérivation, le siège de soupape principale (68) étant formé par une surface de siège conique dans le boîtier (60, 64), l'organe de soupape principale formant, avec un organe de soupape de dérivation (14) espacé axialement et en forme de piston, une unité de soupape, qui reçoit, de manière fixée axialement dans une direction, l'élément en matériau extensible dans une direction axiale, tandis que l'autre extrémité de l'élément en matériau extensible (28) est supportée par une butée (92) du boîtier (60, 64), l'unité de soupape étant guidée de manière déplaçable axialement dans un composant de guidage (36), qui pour sa part est supporté axialement dans le boîtier (60, 62, 64), un ressort de soupape (50) agissant entre l'unité de soupape et le composant de guidage (36), lequel précontraint l'unité dans la direction du siège de soupape principale (68), l'unité de soupape et le composant de guidage (36) présentant des butées coopérantes qui limitent le mouvement d'écartement des pièces, et l'organe de soupape de dérivation en forme de piston (14) coopérant avec une portion cylindrique creuse (38) du composant de guidage (36), **caractérisé en ce que** le composant de guidage (36) présente au moins une rainure de guidage (44) d'axe parallèle, qui s'étend dans la portion cylindrique creuse (38) et qui présente à l'extrémité tournée vers l'organe de soupape de dérivation (14) en forme de piston une portion (46) ouverte vers un côté, l'organe de soupape de dérivation (14) en forme de piston présentant un nez radial (48), qui peut être introduit par le biais de la portion latérale (46) de la rainure (44) dans cette dernière à la manière d'un assemblage par baïonnette.

2. Ensemble de soupape selon la revendication 1,
**caractérisé en ce que** l'organe de soupape principale présente deux plateaux coaxiaux (12, 18) pouvant être connectés l'un à l'autre, qui reçoivent entre eux une bague d'étanchéité (24), qui peut être amenée en prise avec la surface d'étanchéité conique (68) du siège de soupape principale.

3. Ensemble de soupape selon la revendication 2, **caractérisé en ce que** les plateaux (12, 18) peuvent être connectés l'un à l'autre au moyen de tourillons d'encliquetage (22) et de trous d'encliquetage (20) ou similaires.

4. Ensemble de soupape selon la revendication 2 ou 3, **caractérisé en ce que** l'élément en matériau extensible (28) présente une tige, qui présente à l'extrémité tournée vers le siège de soupape principale (68) une bride radiale (32), qui est reçue dans un évidement complémentaire (30) du plateau (18) qui lui fait face.

5. Ensemble de soupape selon l'une quelconque des revendications 1 à 4, **caractérisé en ce que** l'organe de soupape principale est connecté par le biais de plusieurs nervures (16) d'axes parallèles à l'organe de soupape de dérivation (14) en forme de piston.

6. Ensemble de soupape selon la revendication 2 et selon la revendication 5, **caractérisé en ce que** le plateau (12) tourné vers l'organe de soupape de dérivation (14) en forme de piston est connecté à celui-ci, par le biais des nervures (16), et forme avec elles un composant d'une seule pièce (10).

7. Ensemble de soupape selon l'une quelconque des revendications 1 à 6, **caractérisé en ce que** le composant de guidage (36) présente plusieurs bras (42) d'axes parallèles, espacés dans la direction périphérique, dans lesquels est réalisée à chaque fois une rainure de guidage (44).

8. Ensemble de soupape selon l'une quelconque des revendications 1 à 7, **caractérisé en ce que** le composant de guidage (36) présente une bride radiale (40) sur laquelle s'appuie le ressort de soupape (50).

9. Ensemble de soupape selon l'une quelconque des revendications 1 à 8, **caractérisé en ce que** le composant de guidage (36) présente, à l'extrémité tournée vers une surface d'appui pour le composant de guidage (36) dans le boîtier, une saillie ou une nervure annulaire (76), qui coopère avec une rainure annulaire (77) dans la surface de support pour le composant de guidage (36).
